(19) Europäisches Patentamt
European Patent Office
Office européen des brevets

(11) Publication number: **0 180 648 B1**

(12) # EUROPEAN PATENT SPECIFICATION

(45) Date of publication of patent specification: **16.09.92**

(51) Int. Cl.[5]: **C08L 67/02**, C08L 69/00, C08L 63/00

(21) Application number: **85902151.1**

(22) Date of filing: **26.04.85**

(86) International application number: **PCT/JP85/00242**

(87) International publication number: **WO 85/05117 (21.11.85 85/25)**

The file contains technical information submitted after the application was filed and not included in this specification

(54) **POLYESTER COMPOSITION AND MOLDINGS THEREOF.**

(30) Priority: **01.05.84 JP 86091/84**

(43) Date of publication of application: **14.05.86 Bulletin 86/20**

(45) Publication of the grant of the patent: **16.09.92 Bulletin 92/38**

(84) Designated Contracting States: **CH DE FR GB IT LI NL**

(56) References cited:

**No relevant documents have been disclosed.**

(73) Proprietor: **TORAY INDUSTRIES, INC.**
**2, Nihonbashi-Muromachi 2-chome Chuo-ku**
**Tokyo 103(JP)**

(72) Inventor: **HORIUCHI, Kenjiro 47-50, Aza Yakiyama**
**Ouaza Usaka, Agui-cho**
**Chita-gun Aichi 470-22(JP)**
Inventor: **KOMETANI, Kiichi**
**1-82, Ikegamidai**
**Midori-ku, Nagoya-shi Aichi 458(JP)**
Inventor: **INOUE, Toshihide**
**23-40, Aza Miyazakinishi Tozuka, Yamato-cho**
**Ichinomiya-shi Aichi 491(JP)**

(74) Representative: **Coleiro, Raymond et al**
**MEWBURN ELLIS & CO. 2/3 Cursitor Street**
**London EC4A 1BO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

## Description

The subject invention relates to polyester compositions being superior in flow property and melt stability on moulding, as well as in the mechanical properties of products moulded from them, particularly in impact resistance and hot-air aging deterioration resistance, and to articles moulded therefrom.

Having superior characteristics, aromatic polyesters that are represented by polyethylene terephthalate and polybutylene terephthalate are extensively used for manufacturing electric, electronic and automotive parts for example. However, their use has not increased because of the low impact resistance of products moulded from them. Therefore, it has hitherto been proposed to blend therein various kinds of polymer such as butadiene rubbers and acrylic elastomers. Among such known blends, those with copolymers composed of such monomers as $\alpha$-olefins and glycidyl esters of $\alpha$, $\beta$-ethylenically unsaturated acids which are mentioned in JP-A-32045/1977, US-A-4461871, JP-A-58-71941 and JP-A-91759 are comparatively superior to others in improving impact resistance and melt stability on moulding. JP-A-58-71941 and JP-A-91759 mention that small amounts of any of a wide range of additional polymers may also be included, including polycarbonates. Nevertheless, with these blends, there is a problem that articles moulded from them deteriorate in their impact resistance by hot-air aging in an oven.

Further, JP-A-500870/1980 discloses blends of polybutylene terephthalates with aromatic polycarbonates and acrylic elastomers, but these still do not have satisfactory impact resistance despite a small improvement in this property and furthermore the compositions are inferior in melt stability. US-A-4172859 discloses a blend of a polybutylene terephthalate with a copolymer containing ethylene, glycidyl methacrylate and vinyl acetate (Example 7) and a blend of a polycarbonate with a copolymer of ethylene, propylene, 1,4-hexadiene and 2,5-norbornadiene-1 (Example 13). Elian/Vohwinkel, "Neue Polymere Werkstoffe fur die Industrielle Anwendung" mentions that polybutylene terephthalate may be blended with other polymers, including polycarbonate, while JP-A-51-089558 describes the addition to a blend of aromatic polyester and polycarbonate of thermoplastic soft resins such as olefin copolymer resins, polyethers and polyesters. JP-A-125253/1982 discloses blends of polycarbonate with $\alpha$-olefin/glycidyl acrylate or methacrylate polymers. However, a method of solving the above-mentioned problems has, to date, not been found.

The subject invention provides an aromatic polyester composition being superior to known aromatic polyester compositions in flow property and melt stability on molding, as well as providing moulded articles superior in mechanical properties, particularly in impact resistance and hot-air aging resistance, which moulded articles are useful for manufacturing electric, electronic and automative parts.

The polyester composition is composed of:

(a) an aromatic polyester having a relative viscosity of from 1.2 to 2.0 inclusive,

(b) an aromatic polycarbonate having a number average molecular weight of from 10,000 to 80,000 inclusive, and

(c) a glycidyl-group containing copolymer consisting of repeating units derived from the following respective monomers:

- an $\alpha$-olefin,
- a glycidyl ester of an $\alpha$,$\beta$-ethylenically unsaturated carboxylic acid in an amount from 0.5 to 40% by weight of the copolymer; and
- optionally, less than 40%, by weight of the copolymer, of at least a further unsaturated monomer, the said copolymer having a melt index from 0.1 to 100g/10 min inclusive measured at 190°C according to ASTM D-1238,

wherein components (a) and (b) are present in a weight ratio of (a)/(b) in the range of from 90/10 to 10/90 inclusive and the component (c) is present in an amount of from 1 to 80 parts inclusive by weight per 100 parts by weight of the total weight of components (a) and (b).

Preferably, the above composition additionally contains an ethylene based copolymer being composed of ethylene and $\alpha$-olefin having 3 to 10 carbon atoms.

The invention will now be described in more detail.

The compositions according to the invention contain aromatic polyesters and aromatic polycarbonates.

The polyesters may be polymers or copolymers having aromatic rings in chains and prepared by condensing mainly aromatic dicarboxylic acids (or their ester forming derivatives) and diols (or their ester forming derivatives).

The above-mentioned aromatic dicarboxylic acids include terephthalic acid, isophthalic acid, ortho phthalic acid, 2,6-naphthalenedicarboxylic acid, 1,5-naphthalenedicarboxylic acid, bis(p-carboxyphenyl)-methane, anthracenedicarboxylic acid, 4,4'-diphenyldicarboxylic acid, diphenyletherdicarboxylic acid, 1,2-bis(4-carboxyphenoxy)-ethane and ester forming derivatives thereof.

A part of the above-mentioned aromatic dicarboxylic acids may be replaced with other aliphatic dicarboxylic acids such as adipic acid, sebacic acid, azelaic acid, dodecanedionic acid, or alicyclic dicarboxylic acids such as 1,3-cyclohexanedicarboxylic acid and 1,4-cyclohexanedicarboxylic acid or ester forming derivatives thereof, provided they are present in an amount of less than 40 mol percent based on the total acid component.

The diols include aliphatic diols having 2 to 10 carbon atoms such as ethylene glycol, propylene glycol, 1,4-butane diol, neopentyl glycol, 1,5-pentane diol, 1,6-hexane diol, decamethylene glycol, cyclohexanedimethanol and mixtures of these. Further, a small amount of a long-chain glycol having a molecular weight in the range of 400 to 6,000 such as polyethylene glycol, poly-1,3-propylene glycol and polytetramethylene glycol as well as mixtures thereof can be copolymerized with the above-mentioned diols.

Preferred aromatic polyesters in a composition according to the invention are polyethylene terephthalate, polypropylene terephthalate, polybutylene terephthalate, polyhexamethylene terephthalate, polycyclohexylenedimethylene terephthalate and polyethylene-2,6-naphthalate. Most preferred among these is polybutylene terephthalate, because this provides mouldings having excellent mechanical strength.

The aromatic polyesters should have a relative viscosity of 1.2 to 2.0, more preferably of 1.4 to 1.8 as measured in a 0.5 percent orthochlorophenol solution at 25 ° C. Insufficient mechanical strength is developed or no good luster surface mouldings are obtained when the relative viscosity of the polyester is less than 1.2 or more than 2.0 respectively.

The aromatic polycarbonates present in compositions according to the subject invention are preparable by ester exchange or phosgene methods using dihydric phenols or their derivatives.

The dihydric phenols are each represented by the following formula:

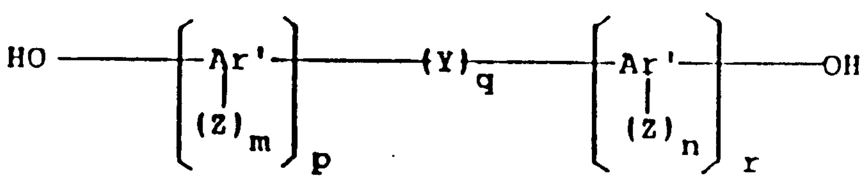

wherein Ar' denotes an aromatic group such as phenylene, biphenylene and naphthylene; Z denotes an alkyl group such as methyl and ethyl, a halogenated alkyl group, an aryl group such as phenyl and naphthyl, a halogenated aryl group, aralkyl group such as benzyl and phenylethyl, a halogenated aralkyl group, or an alicyclic group; Y denotes an alkylene group such as methylene and ethylene, an alkylidene group such as ethylidene and isopropylidene, a tertiary amino group, O, S, SO, $SO_2$, CO or an amide group; m and n are integers from 0 to 4; p is integer at least 1; q is 0 or 1; or r is 0 or a positive integer. When q is o, r is o.

Illustrative of the dihydric phenols are;

bis(4-hydroxyphenyl)-methane;
1,1-bis(4-hydroxyphenyl)-ethane;
1,2-bis(4-hydroxyphenyl)-ethane;
2,2-bis(4-hydroxyphenyl)-propane;
1,1-bis(4-hydroxyphenyl)-propane;
2,2-bis(4-hydroxy-3-chlorophenyl)-propane;
2,2-bis(4-hydroxy-3,5-dichlorophenyl)-propane;
2,2-bis(4-hydroxy-3-bromophenyl)-propane;
2,2-bis(4-hydroxy-3,5-dibromophenyl)-propane;
2,2-bis(4-hydroxy-3-methylphenyl)-propane;
2,2-bis(4-hydroxy-3-methoxyphenyl)-propane;
1,4-bis(4-hydroxyphenyl)-cyclohexane;
1,1-bis(4-hydroxyphenyl) -cyclohexane;
1,2-bis(4-hydroxyphenyl)-ethylene;
1,4-bis(4-hydroxyphenyl)-benzene;
bis(4-hydroxyphenyl)-phenylmethane; bis(4-hydroxyphenyl)-diphenylmethane;
1,1-bis(4-hydroxyphenyl)-2,2,2-trichloroethane;
bis(4-hydroxyphenyl)-ketone; bis(4-hydroxyphenyl)-sulfide;
bis(4-hydroxyphenyl)-sulfone; 4,4'-dihydroxydiphenyl ether;

4,4'-dihydroxybiphenyl; 3,3'-dihydroxybiphenyl;
hydroquinone; resorcinol; 2,6-dihydroxynaphthalene;
2,7-dihydroxynaphthalenes; and phenolphthalein. Among these, a bis(4-hydroxyphenyl)alkane is preferred and 2,2-bis(4-hydroxyphenyl)-propane is especially preferred. More than two dihydric phenols are usable in combination. They may be used together with small quantities of alicyclic diols such as 1,4-cyclohexane diol, aliphatic diols such as 1,6-hexane diol, aromatic group containing aliphatic diols such as p-xylene glycol or can be end-capped by monohydric phenols such as phenol and p-tert-butylphenol.

The aromatic polycarbonate has a number-average molecular weight of 10,000 to 80,000, preferably of 15,000 to 40,000. The compositions can neither provide mouldings having sufficiently good mechanical properties nor hot-air ageing resistance if the number average molecular weight is less than 10,000, and compositions are inferior in moldability and provide mouldings having inferior mechanical properties if the number average molecular weight is more than 80,000.

In a composition according to the invention, the aromatic polyester and aromatic polycarbonate are present in a weight ratio in the range from 90/10 to 10/90, preferably from 80/20 to 20/80, inclusive, respectively. In contrast, the synergistic effect of an increase in impact resistance of mouldings of polyester compositions and a resulting increase in hot-air ageing resistance is small unless the respective amounts of polyester and polycarbonate are kept within the above-mentioned ranges.

The glycidyl-group containing copolymers consists essentially of the α-olefin and the glycidyl ester of an α,B-ethylenically unsaturated carboxylic acid. Examples of the α-olefin are ethylene, propylene and butene-1, of which ethylene is preferred.

The glycidyl ester compound may be represented by the following general formula:

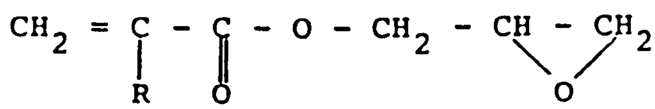

wherein R denotes a hydrogen atom, a lower alkyl group or a glycidyl-group substituted lower alkyl group. Glycidyl acrylate, glycidyl methacrylate, glycidyl ethacrylate and glycidyl itaconate are examples. Of these, glycidyl methacrylate is preferred. The amount of glycidyl ester in the copolymer is in the range of from 0.5 to 40 percent, preferably from 1 to 30 percent, more preferably from 2 to 20 percent by weight. If the content is less than 0.2 percent or more than 40 percent, the copolymers do not provide mouldings having a satisfactory increase in impact resistance nor do they provide compositions having a satisfactory decrease in moulding flowability. Glycidyl esters of α, β-ethylenicallyunsaturated carboxylic acids can be copolymerized by standard copolymerization or graft reactions. Further, less than 40 percent by weight of at least one unsaturated monomer selected from monomers such as vinyl ethers; vinyl acetate, propione and other vinyl esters; methyl, ethyl, propyl and butyl and other esters of acrylic or methacrylic acid; acrylonitrile; styrene; and carbon monoxide may be copolymerized with the above copolymers.

The MI (Melt Index) of the glycidyl-group containing copolymer is in the range of between 0.1 and 100, preferably between 0.5 and 30, wherein the value of MI is measured at 190 °C according to ASTM D-1238 and the unit is gr./10 min. If the MI is less than 0.1 gr./10 min. or more than 100 gr./10 min. the increase in impact resistance is small.

Preferred among glycidyl-group containing copolymers are ethylene / glycidyl methacrylate, ethylene / vinyl acetate / glycidyl methacrylate, ethylene / carbon monoxide / glycidyl methacrylate, ethylene / glycidyl acrylate, and ethylene / glycidyl acrylate / vinyl acetate copolymers. Among them ethylene / glycidyl methacrylate copolymer is more preferred.

The glycidyl-group containing copolymers in a composition according to the invention are present in a an amount of from 1 to 80 parts by weight, preferably of 5 to 50 parts by weight, per 100 parts by weight of the total weight of aromatic polyester and aromatic polycarbonate. If the amount is less than 1 part or more than 80 parts, polyester compositions do not provide moulded products having satisfactory increase in impact resistance or the mouldings deteriorate in mechanical properties.

The compositions according to the invention provide mouldings having an even further increase in impact resistance when they are additionally composed of an ethylene based copolymer composed of ethylene and α-olefin having 3 to 10 carbon atoms and/or a diene copolymer being composed of ethylene, α-olefin having 3 to 10 carbon atoms and unconjugated diene.

The above-mentioned α-olefins include propylene, butene-1, pentene-1, 3-methylpentene-1, octacene-1, decene-1 and mixtures of two or more of these. Of these, propylene and butene-1 are preferred.

The unconjugated dienes include various kinds of norbonene compounds, dicyclopentadiene compounds, tetrahydroindene compounds, 1,4-hexadiene and mixtures thereof. Preferred among these are 5-ethylidene-2-norbonene, dicyclopentadiene and 1,4-hexadiene.

The molar ratios of ethylene to α-olefin in the ethylene based copolymers are in the range between 40/60 and 99/1, preferably between 70/30 and 95/5, and in the diene copolymers the copolymerized ratios of α-olefin and unconjugated diene are in an amount of from 5 to 80 mol percent, preferably from 10 to 60 mol percent α-olefin and from 0.1 to 20 mol percent, preferably from 0.5 to 10 mol percent, conjugated diene.

The ethylene based copolymers and/or the diene copolymers are present in an amount of from 1 to 50 parts by weight, preferably from 5 to 40 parts by weight, per 100 parts by weight of the total weight of the aromatic polyesters and aromatic polycarbonates.

The compositions according to the invention can provide mouldings having increased stiffness by further adding inorganic fillers. This addition generally causes a decrease in impact resistance in the moulded product. Such decrease is however small when moulding a composition according to the invention.

Among the inorganic fillers, fibrous and granular ones as well as their mixtures can be mentioned. The fibrous ones include glass, silas glass, alumina , silicon carbide, ceramic, asbestos, gypsum, metal (e.g. stainless steel) and other inorganic and carbon fibers. The granular ones, on the other hand, include wollastonite, sericite, kaolin, mica, clay, bentonite, asbestos, talc, alumina silicate and other silicates; metal oxides such as alumina as well as silica, magnesium oxide, zirconium oxide and titanium oxide; carbonates such as calcium carbonate and magnesium carbonate as well as dolomite; sulfates such as calcium sulfate and barium sulfate; glass beads; boron nitride; silicone carbide; sialon. They are permitted to be hollow (e.g. hollow glass fiber, glass microballoon, silas balloon, carbon balloon, etc.). Preferred among these are glass fibers, carbon fibers, metal fibers, potassium titanate whisker, glass flakes, glass beads, wollastonite, mica, talc, clay, titanium oxide, aluminum oxide, calcium carbonate and barium sulfate. Particularly, among these glass fiber is more preferred. The inorganic fillers should preferably be treated with silane, titanate or another conventional coupling agent, and glass fibers with a conventional converging agent such as epoxy resin and vinyl acetate resin.

The inorganic fillers are added at ratios, by weight, of 3 to 100 parts, preferably of 5 to 80 parts, per 100 parts by weight of the total weight of aromatic polyesters and aromatic polycarbonates.

Compositions according to the invention can provide mouldings having increased impact resistance by adding compounds for prompting the reaction between epoxy compounds and carboxylic acids. They include triphenyl amine, 2,4,6-tris(dimethylaminomethyl)phenol and other tertiary amines; triphenyl and triisodecyl phosphites and other phosphite esters; triphenylallyphosphonium bromide and other phosphonium compounds; triphenylphosphine and other tertiary phosphines; lithium, calcium and other metal stearates; sodium dodecylbenzenesulfonate and sodium 3,5-dicarbomethoxybenezesulfonate and other metal sulfonates; and sodium lauryl sulfate and other organic sulfate salts. Their addition should be made at ratios of 0.001 to 5 parts by weight to 100 parts by weight of aromatic polyesters.

Compositions according to the invention permit the addition of any one or more ingredients selected from fibrous and granular fillers and reinforcements, antioxidants, heat stabilizers, ultraviolet ray-absorbents, lubricants, mold releasing agents, colorants including dyes and pigments, flame retardants and flame retarding assistants, antistatic agents, crystallization promotors, and other ingredients as well as small quantities of one, two or even more of thermoplastic resins, thermosetting resins and thermoplastic elastomers, all provided that such ingredients are not present in sufficient quantities to adversely affect the properties of the composition.

The processes for producing the compositions according to the invention are not limited. However, preferable among them is to melt-extrude, by using an extruder, the dry-blendings of aromatic polyesters, aromatic polycarbonates, glycidyl-group containing copolymers and, if necessary, other additives.

The resin composition of the invention can be moulded according to conventional methods such as injection moulding, extrusion moulding, and moulded articles therefrom show excellent properties.

Embodiments of the invention are illustrated below in more detail with reference to Examples.

Examples 1-8:

Dry-blendings of polybutylene terephthalate (PBT) having a relative viscosity of 1.56 and present in the amounts shown in Table 1 with aromatic polycarbonates derived from 2,2'-bis(4-hydroxyphenyl)propane and having different number average molecular weights and with glycidyl-group containing copolymers of ethylene/glycidyl methacrylate having different proportional amounts of the monomers and/or different melt indexes were melt-extruded and pelletized using a screw extruder set at 250 ° C. The melt viscosity of these

pellets was measured at 250 ° C using a koka-type flow tester. Subsequently they were moulded into ASTM No. 1 dumbbells and 1/4-in. (0.635 cm) wide Izod impact testpieces using a 5-oz. (142g) screw in-line type injection molding machine. While injection molding, the minimum injection (lower limit molding) pressure required for mould charge was measured. The testpieces underwent tensile and notched Izod impact tests. Further they were kept heat-treated in an oven at 150 ° C for 500 hours and subjected to tensile and notched Izod impact tests. The results are shown in Table 1.

Table 1

| | | PBT (Part by weight) | Aromatic polycarbonates | | Glycidyl-group containing copolymers | | Mechanical properties | | | | | | Melting viscosity | Lower limit Pressure |
|---|---|---|---|---|---|---|---|---|---|---|---|---|---|---|
| | | | | | | | Not treated | | | Heat-treated | | | | |
| | | | Kinds | Amounts (parts by weight) | Kinds | Amounts (parts by weight) | Tensile strength $kg/cm^2$ $(N/mm^2)$ | Elongation at break (%) | Izod impact strength kg.cm/cm-notch (J/cm) | Tensile strength $kg/cm^2$ $(N/mm^2)$ | Elongation at break (%) | Izod impact strength kg.cm/cm-notch (J/cm) | Pa.s (poise) | $kg/cm^2$ $(N/mm^2)$ |
| Examples | 1 | 90 | A | 10 | E | 25 | 380(37.3) | 195 | 46(4.5) | 386(37.9) | 96 | 40(3.92) | 530(5300) | 43(4.2) |
| | 2 | 70 | A | 30 | E | 25 | 383(37.6) | 200 < | 59(5.8) | 391(38.3) | 151 | 53(5.19) | 550(5500) | 44(4.3) |
| | 3 | 50 | A | 50 | E | 25 | 398(39.0) | 200 < | 70(6.9) | 409(40.1) | 159 | 61(5.98) | 710(7100) | 50(4.9) |
| | 4 | 30 | A | 70 | E | 25 | 404(39.6) | 200 < | 65(6.4) | 413(40.5) | 150 | 55(5.39) | 800(8000) | 53(5.2) |
| | 5 | 10 | A | 90 | E | 25 | 410(40.2) | 181 | 47(4.6) | 411(40.3) | 93 | 39(3.82) | 780(7800) | 52(5.1) |
| | 6 | 70 | B | 30 | E | 25 | 380(37.3) | 190 | 41(4.0) | 389(38.1) | 112 | 33(3.23) | 620(6200) | 47(4.6) |
| | 7 | 70 | A | 30 | E | 5 | 435(42.7) | 200 < | 17(1.7) | 441(43.2) | 140 | 15(1.47) | 490(4900) | 39(3.8) |
| | 8 | 70 | A | 30 | E | 40 | 339(33.2) | 200 < | 62(6.1) | 347(34.0) | 132 | 50(4.9) | 850(8500) | 54(5.3) |
| Comparative Examples | 1 | 100 | - | - | - | - | 569(55.8) | 120 | 3.2(0.31) | 572(56.1) | 15 | 1.8(0.18) | 310(3100) | 34(3.3) |
| | 2 | 100 | - | - | E | 25 | 388(38.1) | 184 | 35(3.4) | 394(38.6) | 25 | 5.5(0.54) | 520(5200) | 43(4.2) |
| | 3 | 70 | A | 30 | - | - | 577(56.6) | 115 | 4.3(0.42) | 586(57.5) | 32 | 3.1(0.30) | 420(4200) | 37(3.6) |
| | 4 | 50 | A | 50 | - | - | 592(58.1) | 73 | 10(0.98) | 601(58.9) | 27 | 5.3(0.52) | 650(6500) | 48(4.7) |
| | 5 | 70 | A | 30 | E | 90 | 329(32.3) | 132 | 45(4.4) | 332(32.6) | 59 | 27(2.65) | 1430(14300) | 73(7.2) |
| | 6 | 98 | A | 2 | E | 25 | 375(36.8) | 195 | 37(3.6) | 391(38.3) | 51 | 8.1(0.79) | 530(5300) | 43(4.2) |
| | 7 | 70 | C | 30 | E | 25 | 371(36.4) | 57 | 21(2.1) | 382(37.5) | 20 | 12(1.18) | 1180(11800) | 63(6.2) |
| | 8 | 70 | D | 30 | E | 25 | 362(35.5) | 63 | 25(2.5) | 368(36.1) | 27 | 11(1.08) | 450(4500) | 38(3.7) |
| | 9 | 70 | A | 30 | F | 25 | 364(35.7) | 105 | 22(2.2) | 369(36.2) | 39 | 8.5(0.83) | 430(4300) | 37(3.6) |
| | 10 | 70 | A | 30 | G | 25 | 365(35.8) | 51 | 16(1.6) | 357(35.0) | 25 | 7.2(0.71) | 750(7500) | 51(5.0) |
| | 11 | 70 | A | 30 | H | 25 | 357(35.0) | 44 | 13(1.3) | 354(34.7) | 11 | 6.3(0.62) | 1320(13200) | 69(6.8) |
| | 12 | 70 | A | 30 | I | 25 | 370(36.3) | 56 | 10(0.98) | 365(35.8) | 20 | 4.5(0.44) | 420(4200) | 37(3.6) |

Note*: aromatic polycarbonate

A: number average molecular weight = 25,000

B: number average molecular weight = 62,000

C: number average molecular weight = 95,000

D: number average molecular weight = 9,000

Note**: specifications of glycidyl-group containing copolymers

| Codes | Ethylene/glycidyl methacrylate ratio by weight | M I gr./10 min. |
|---|---|---|
| E | 90/10 | 3.0 |
| F | 90/10 | 120 |
| G | 90/10 | 0.05 |
| H | 55/45 | 3.8 |
| I | 99.8/0.2 | 2.5 |

The results in Table 1 indicate that resin compositions provide moulded articles having increased impact resistance and superior hot-air aging resistance if they contain both polycarbonates and glycidyl-group containing copolymers having the characteristics and being present in the amounts required by the invention.

Example 9-12:

Evaluation was carried out in the same manner as Example 3 except that 15 of the 25 parts by weight of the glycidyl-group containing copolymer E was replaced with the ethylene based copolymers or diene copolymers shown in Table 2. The results are shown in Table 2.

Table 2

| Examples | | Kinds of ethylene based co-polymer or diene copolymer * | Mechanical properties | | | | | | Melting viscosity Pa.s (poise) | Lower limit pressure kg/cm² (N/mm²) |
|---|---|---|---|---|---|---|---|---|---|---|
| | | | Not treated | | | Heat-treated | | | | |
| | | | Tensile strength kg/cm² (N/mm²) | Elongation at break (%) | Izod impact strength kg.cm/cm notch (J/cm) | Tensile strength kg/cm² (N/mm²) | Elongation at break (%) | Izod Impact strength kg.cm/cm notch (J/cm) | | |
| Examples | 9 | J | 393 (38.5) | 200< | 83 (8.1) | 398 (39.0) | 175 | 76 (7.4) | 650 (6500) | 48 (4.7) |
| | 10 | K | 395 (38.7) | 200< | 87 (8.5) | 403 (39.5) | 183 | 80 (7.8) | 630 (6300) | 47 (4.6) |
| | 11 | L | 389 (38.1) | 200< | 82 (8.0) | 394 (38.6) | 166 | 73 (7.2) | 660 (6600) | 48 (4.7) |
| | 12 | M | 390 (38.2) | 200< | 88 (8.6) | 400 (39.2) | 171 | 76 (7.4) | 660 (6600) | 48 (4.7) |

Note*: ethylene based copolymer or diene copolymer

J: ethylene/propylene (80/20 molar ratio) copolymer MI = 1.5

K: ethylene/butene-1 (90/10 molar ratio) copolymer MI = 3

L: ethylene/propylene/dicyclopentadiene (70/28/2 molar ratio) copolymer MI = 0.8

M: ethylene/butene-1/5-ethylidene-2-norbonene (88/10/2 molar ratio) copolymer MI = 1

The results indicate that the resin compositions embodying the invention provide moulded articles having still further increased impact strength and compostions having still further improved moulding flowability when containing an ethylene based copolymer or diene copolymer.

Examples 13-14:

Dry-blendings obtained by adding glass fibers (3mm-long chopped strands) in the amounts shown in Table 3 to polybutylene terephthalate (PBT) having a relative viscosity of 1.45 and the aromatic polycarbonate A and glycidyl-group containing copolymer E used in Examples 1 were evaluated in the same manner as described in Example 1 except that the melt viscosity and lower limit moulding pressure were not measured. The results of these evaluations are also shown in Table 3.

Table 3

| | | PBT (parts by weight) | Aromatic poly-carbonate A (parts by weight) | Glycidyl-group containing copolymer E (parts by weight) | Inorganic filler (parts by weight) | Mechanical properties: Not treated: Tensile strength kg/cm² (N/mm²) | Not treated: Elongation at break (%) | Not treated: Izod impact strength kg.cm/cm-notch (J/cm) | Heat-treated: Tensile strength kg/cm² (N/mm²) | Heat-treated: Elongation at break (%) | Heat-treated: Izod impact strength kg.cm/cm-notch (J/cm) |
|---|---|---|---|---|---|---|---|---|---|---|---|
| Examples | 13 | 50 | 50 | 20 | 10 | 740(72.6) | 8.3 | 27 (2.7) | 735(72.1) | 7.9 | 25 (2.5) |
| | 14 | 50 | 50 | 20 | 20 | 870(85.3) | 6.6 | 18 (1.8) | 860(84.3) | 6.1 | 16 (1.6) |
| Comparative Examples | 13 | 60 | 60 | - | 10 | 735(72.1) | 5.2 | 3.4(0.33) | 705(69.1) | 3.8 | 3.2(0.31) |
| | 14 | 60 | 60 | - | 20 | 860(84.3) | 4.1 | 4.0(0.39) | 835(81.9) | 3.4 | 3.6(0.35) |
| | 15 | 120 | - | 20 | 20 | 860(84.3) | 5.7 | 9.5(0.93) | 840(82.4) | 4.2 | 5.8(0.57) |

The results indicate that the compositions embodying the invention provide moulded articles having increased impact resistance and hot-air aging resistance as well as stiffness if inorganic fillers are also added.

Polyester compositions embodying the subject invention are useful, in particular, for manufacturing electric, electronic and automative parts.

## Claims

1. A polyester composition composed of:
   (a) an aromatic polyester having a relative viscosity of from 1.2 to 2.0 inclusive,
   (b) an aromatic polycarbonate having a number average molecular weight of from 10,000 to 80,000 inclusive, and
   (c) a glycidyl-group containing copolymer consisting of repeating units derived from the following respective monomers:
   - an $\alpha$-olefin,
   - a glycidyl ester of an $\alpha,\beta$-ethylenically unsaturated carboxylic acid in an amount from 0.5 to 40% by weight of the copolymer; and
   - optionally, less than 40%, by weight of the copolymer, of at least a further unsaturated monomer, the said copolymer having a melt index from 0.1 to 100g/10 min inclusive measured at 190 °C according to ASTM D-1238,

   wherein components (a) and (b) are present in a weight ratio of (a)/(b) in the range of from 90/10 to 10/90 inclusive and the component (c) is present in an amount of from 1 to 80 parts inclusive by weight per 100 parts by weight of the total weight of components (a) and (b).

2. A composition according to claim 1, wherein the aromatic polyester (a) and aromatic polycarbonate (b) are present in a weight ratio of (a)/(b) in the range of between 80/20 and 10/90.

3. A composition according to claim 2, wherein the weight ratio of (a)/(b) lies in the range of between 80/20 and 20/80.

4. A composition according to any preceding claim, wherein the glycidyl-group containing copolymer is present in an amount of from 5 to 50 parts inclusive by weight per 100 parts of the total weight of the aromatic polyester and aromatic polycarbonate.

5. A composition according to any preceding claim, wherein the aromatic polyester is polyalkylene terephthalate.

6. A composition according to claim 4, wherein the polyalkylene terephthalate is polybutylene terephthalate.

7. A composition according to any preceding claim, wherein the aromatic polycarbonate is bis(4-hydroxyphenyl)alkane polycarbonate.

8. A composition according to claim 7, wherein the bis-(4-hydroxylphenyl)alkane is 2,2-bis(4-hydroxyphenyl)propane.

9. A composition according to any preceding claim, wherein the aromatic polycarbonate has a number average molecular weight of from 15,000 to 40,000 inclusive.

10. A composition according to any preceding claim, wherein the glycidyl ester of the glycidyl-group containing copolymer is glycidyl methacrylate or glycidyl acrylate.

11. A composition according to any preceding claim, wherein $\alpha$-olefin of the glycidyl-group containing copolymer is ethylene.

12. A compostion according to Claim 10 or 11, wherein the glycidyl-group containing copolymer is selected from ethylene/glycidyl methacrylate and ethylene/glycidyl methacrylate/vinyl acetate copolymers.

13. A composition according to any preceding claim, further comprising an ethylene based copolymer being composed of ethylene and $\alpha$-olefin having 3 to 10 carbon atoms, the molar ratio of ethylene to $\alpha$-olefin in the ethylene based copolymer being in the range between 40/60 and 99/1 and which ethylene based copolymer is present in an amount of from 1 to 50 parts inclusive by weight per 100 parts by weight of the total weight of the aromatic polyester and aromatic polycarbonate.

**14.** A composition according to any preceding claim, further comprising a diene copolymer being composed of ethylene, $\alpha$-olefin having 3 to 10 carbon atoms and unconjugated diene, the molar amount of the $\alpha$-olefin in the diene copolymer being in an amount of from 5 to 80 mol percent and the molar amount of the unconjugated diene in the diene copolymer being in an amount of from 0.1 to 20 mol percent and which diene copolymer is present in an amount of from 1 to 50 parts inclusive by weight per 100 parts by weight of the total weight of the aromatic polyester and aromatic polycarbonate.

**15.** A composition according to Claim 13, wherein the ethylene based copolymer is selected from ethylene/propylene, ethylene/butene-1 and ethylene/propylene/butene-1 copolymers.

**16.** A composition according to claim 14, wherein the said diene copolymer contains at least two said $\alpha$-olefins including at least one of propylene and butene-1 and contains at least two unconjugated dienes including at least one of dicyclopentadiene, 5-ethylidene-2-norbonene and 1,4-hexadiene.

**17.** A composition according to any preceding claim, further comprising 5 to 100 parts by weight of inorganic filler per 100 parts by weight of the total of the said components (a) and (b).

**18.** A composition according to claim 17, wherein the inorganic filler is selected from glass fibers, carbon fibers, metal fibers, potassium titanate whisker, glass flakes, glass beads, wollastonite, mica, talc, clay, titanium oxide, aluminium oxide, calcium carbonate and barium sulfate.

**19.** An injection moulded article of a polyester composition composed of:
(a) an aromatic polyester having a relative viscosity of 1.2 to 2.0 inclusive,
(b) an aromatic polycarbonate having a number average molecular weight of from 10,000 to 80,000 inclusive, and
(c) a glycidyl-group containing copolymer consisting of repeating units derived from the following respective monomers:
- an $\alpha$-olefin,
- a glycidyl ester of an $\alpha$, $\beta$-ethylenically unsaturated carboxylic acid in an amount from 0.5 to 40% by weight of the copolymer; and
- optionally, less than 40%, by weight of the copolymer, of at least a further unsaturated monomer, the said copolymer having a melt index from 0.1 to 100g/10 min inclusive measured at 190°C according to ASTM D-1238,

wherein components (a) and (b) are present in a weight ratio of (a)/(b) in the range of from 90/10 to 10/90 inclusive and the component (c) is present in an amount of from 1 to 80 parts inclusive by weight per 100 parts by weight of the total weight of components (a) and (b).

**20.** An extrusion moulded article of a polyester composition composed of:
(a) an aromatic polyester having a relative viscosity of from 1.2 to 2.0 inclusive,
(b) an aromatic polycarbonate having a number average molecular weight of from 10,000 to 80,000 inclusive, and
(c) a glycidyl-group containing copolymer consisting of repeating units derived from the following respective monomers:
- an $\alpha$-olefin,
- a glycidyl ester of an $\alpha,\beta$-ethylenically unsaturated carboxylic acid in an amount from 0.5 to 40% by weight of the copolymer; and
- optionally, less than 40%, by weight of the copolymer, of at least a further unsaturated monomer, the said copolymer having a melt index from 0.1 to 100g/10 min inclusive measured at 190°C according to ASTM D-1238,

wherein components (a) and (b) are present in a weight ratio of (a)/(b) in the range of from 90/10 to 10/90 inclusive and the component (c) is present in an amount of from 1 to 80 parts inclusive by weight per 100 parts by weight of the total weight of components (a) and (b).

## Patentansprüche

**1.** Polyester-Zusammensetzung, gebildet durch:
(a) einen aromatischen Polyester mit einer relativen Viskosität von 1,2 bis 2,0 einschließlich,
(b) ein aromatisches Polycarbonat mit einem Zahlendurchschnittsmolekulargewicht von 10 000 bis

80 000 einschließlich, und

(c) ein Glycidylgruppen enthaltendes Copolymeres, bestehend aus sich wiederholenden Einheiten, abgeleitet von den folgenden jeweiligen Monomeren:

- einem $\alpha$-Olefin,
- einem Glycidylester einer $\alpha,\beta$-ethylenartig ungesättigten Carbonsäure in einer Menge von 0,5 bis 40 Gew.-% des Copolymeren; und
- wahlweise, weniger als 40 Gew.-% des Copolymeren, von wenigstens einem weiteren ungesättigten Monomeren,

wobei dieses Copolymere einen Schmelzindex von 0,1 bis 100 g/10 min einschließlich, gemessen bei 190°C nach der Norm ASTM D-1238 besitzt,
worin die Bestandteile (a) und (b) in einem Gewichtsverhältnis von (a)/(b) im Bereich von 90/10 bis 10/90 einschließlich vorhanden sind, und der Bestandteil (c) in einer Menge von 1 bis 80 Gew.-Teilen einschließlich pro 100 Gew.-Teile des Gesamtgewichtes der Bestandteile (a) und (b) vorhanden ist.

**2.** Zusammensetzung nach Anspruch 1, worin der aromatische Polyester (a) und das aromatische Polycarbonat (b) in einem Gewichtsverhältnis von (a)/(b) im Bereich zwischen 80/20 und 10/90 vorhanden sind.

**3.** Zusammensetzung nach Anspruch 2, worin das Gewichtsverhältnis von (a)/(b) in dem Bereich zwischen 80/20 und 20/80 liegt.

**4.** Zusammensetzung nach einem der vorhergehenden Ansprüche, worin das Glycidylgruppen enthaltende Copolymere in einer Menge von 5 bis 50 Gew.-Teilen einschließlich pro 100 Gew.-Teile des Gesamtgewichtes des aromatischen Polyesters und des aromatischen Polycarbonates vorhanden ist.

**5.** Zusammensetzung nach einem der vorhergehenden Ansprüche, worin der aromatische Polyester Polyalkylenterephthalat ist.

**6.** Zusammensetzung nach Anspruch 4, worin das Polyalkylenterephthalat Polybutylenterephthalat ist.

**7.** Zusammensetzung nach einem der vorhergehenden Ansprüche, worin das aromatische Polcarbonat Bis-(4-hydroxyphenyl)-alkanpolycarbonat ist.

**8.** Zusammensetzung nach Anspruch 7, worin das Bis-(4-hydroxyphenyl)-alkan 2,2-Bis-(4-hydroxyphenyl)-propan ist.

**9.** Zusammensetzung nach einem der vorhergehenden Ansprüche, worin das aromatische Polycarbonat ein Zahlendurchschnittsmolekulargewicht von 15 000 bis 40 000 einschließlich besitzt.

**10.** Zusammensetzung nach einem der vorhergehenden Ansprüche, worin der Glycidylester des Glycidylgruppen enthaltenden Copolymeren Glycidylmethacrylat oder Glycidylacrylat ist.

**11.** Zusammensetzung nach einem der vorhergehenden Ansprüche, worin das $\alpha$-Olefin des Glycidylgruppen enthaltenden Copolymeren Ethylen ist.

**12.** Zusammensetzung nach Anspruch 10 oder 11, worin das Glycidylgruppen enthaltende Copolymere aus Ethylen/Glycidylmethacrylat- und Ethylen/Glycidylmethacrylat/Vinylacetat-copolymeren ausgewählt ist.

**13.** Zusammensetzung nach einem der vorhergehenden Ansprüche, weiter umfassend ein Copolymers auf Ethylenbasis, zusammengesetzt aus Ethylen und einem $\alpha$-Olefin mit 3 bis 10 Kohlenstoffatomen, wobei das Molverhältnis von Ethylen zu $\alpha$-Olefin in den Copolymeren auf Ethylenbasis im Bereich zwischen 40/60 und 99/1 liegt und das Copolymere auf Ethylenbasis in einer Menge von 1 bis 50 Gew.-Teilen einschließlich pro 100 Gew.-Teile des Gesamtgewichtes von aromatischem Polyester und aromatischem Polycarbonat vorhanden ist.

**14.** Zusammensetzung nach einem der vorhergehenden Ansprüche, weiterhin umfassend ein Diencopolymeres, zusammengesetzt aus Ethylen, $\alpha$-Olefin mit 3 bis 10 Kohlenstoffatomen und nichtkonjugiertem Dien, wobei die Molmenge des $\alpha$-Olefins in dem Diencopolymeren einen Wert von 5 bis 80 Mol-%

besitzt und die Molmenge des nichtkonjugierten Diens in den Diencopolymeren einen Wert von 0,1 bis 20 Mol-% besitzt, und wobei dieses Diencopolymere in einer Menge von 1 bis 50 Gew.-Teilen einschließlich pro 100 Gew.-Teile des Gesamtgewichtes von aromatischem Polyester und aromatischem Polycarbonat vorhanden ist.

**15.** Zusammensetzung nach Anspruch 13, worin das Copolymere auf Ethylenbasis aus Ethylen/Propylen-,Ethylen/Buten-1 und Ethylen/Propylen-, Ethylen/Buten-1- und Ethylen/Propylen/Buten-1-copolymeren ausgewählt ist.

**16.** Zusammensetzung nach Anspruch 14, worin dieses Diencopolymere wenigstens zwei dieser $\alpha$-Olefine, einschließlich wenigstens einem der Stoffe Propylen und Buten-1 enthält und wenigstens zwei nichtkonjugierte Diene einschließlich wenigstens einem der Stoffe Dicyclopentadien, 5-Ethyliden-2-norbonen und 1,4-Hexadien enthält.

**17.** Zusammensetzung nach einem der vorhergehenden Ansprüche, weiterhin umfassend 5 bis 100 Gew.-Teile anorganischen Füllstoff pro 100 Gew.-Teile der Gesamtmenge der Bestandteile (a) und (b).

**18.** Zusammensetzung nach Anspruch 17, worin der anorganische Füllstoff ausgewählt ist aus: Glasfasern, Kohlenstoffasern, Metallfasern, Kaliumtitanatwhiskern, Glasflocken, Glasperlen, Wollastonit, Glimmer, Talkum, Ton, Titanoxid, Aluminiumoxid, Kalziumcarbonat und Bariumsulfat.

**19.** Spritzverformter Gegenstand aus einer Polyester-Zusammensetzung, gebildet durch:
(a) einen aromatischen Polyester mit einer relativen Viskosität von 1,2 bis 2,0 einschließlich,
(b) ein aromatisches Polycarbonat mit einem Zahlendurchschnittsmolekulargewicht von 10 000 bis 80 000 einschließlich, und
(c) ein Glycidylgruppen enthaltendes Copolymeres, bestehend aus sich wiederholenden Einheiten, abgeleitet von den folgenden jeweiligen Monomeren:
- einem $\alpha$-Olefin,
- einem Glycidylester einer $\alpha,\beta$-ethylenartig ungesättigten Carbonsäure in einer Menge von 0,5 bis 40 Gew.-% des Copolymeren; und
- wahlweise, weniger als 40 Gew.-% des Copolymeren, von wenigstens einem weiteren ungesättigten Monomeren,

wobei dieses Copolymere einen Schmelzindex von 0,1 bis 100 g/10 min einschließlich, gemessen bei 190°C nach der Norm ASTM D-1238 besitzt,
worin die Bestandteile (a) und (b) in einem Gewichtsverhältnis von (a)/(b) im Bereich von 90/10 bis 10/90 einschließlich vorhanden sind, und der Bestandteil (c) in einer Menge von 1 bis 80 Gew.-Teilen einschließlich pro 100 Gew.-Teile des Gesamtgewichtes der Bestandteile (a) und (b) vorhanden ist.

**20.** Extrusionsverformter Gegenstand aus einer Polyester-Zusammensetzung, gebildet durch:
(a) einen aromatischen Polyester mit einer relativen Viskosität von 1,2 bis 2,0 einschließlich,
(b) ein aromatisches Polycarbonat mit einem Zahlendurchschnittsmolekulargewicht von 10 000 bis 80 000 einschließlich, und
(c) ein Glyidylgruppen enthaltendes Copolymeres, bestehend aus sich wiederholenden Einheiten, abgeleitet von den folgenden jeweiligen Monomeren:
- einem $\alpha$-Olefin,
- einem Glycidylester einer $\alpha,\beta$-ethylenartig ungesättigten Carbonsäure in einer Menge von 0,5 bis 40 Gew.-% des Copolymeren; und
- wahlweise, weniger als 40 Gew.-% des Copolymeren, von wenigstens einem weiteren ungesättigten Monomeren,

wobei dieses Copolymere einen Schmelzindex von 0,1 bis 100 g/10 min einschließlich, gemessen bei 190°C nach der Norm ASTM D-1238 besitzt,
worin die Bestandteile (a) und (b) in einem Gewichtsverhältnis von (a)/(b) im Bereich von 90/10 bis 10/90 einschließlich vorhanden sind, und der Bestandteil (c) in einer Menge von 1 bis 80 Gew.-Teilen einschließlich pro 100 Gew.-Teile des Gesamtgewichtes der Bestandteile (a) und (b) vorhanden ist.

**Revendications**

**1.** Composition de polyester composée de :

(a) un polyester aromatique ayant une viscosité relative de 1,2 à 2,0 inclus,

(b) un polycarbonate aromatique ayant un poids moléculaire moyen en nombre de 10.000 à 80.000 inclus et

(c) un copolymère contenant un groupe glycidyle consistant en unités récurrentes dérivées des monomères respectifs suivants :

- une $\alpha$-oléfine,
- un glycidyl ester d'un acide carboxylique à insaturation $\alpha,\beta$-éthylénique en une quantité de 0,5 à 40% en poids du copolymère; et
- facultativement, moins de 40% en poids du copolymère d'au moins un autre monomère insaturé, ledit copolymère ayant un indice de fusion de 0,1 à 100g/10mn inclus mesuré à 190 ° C selon ASTMD D-1238,

où les composants (a) et (b) sont présents à un rapport pondéral de (a)/(b) compris entre 90/10 et 10/90 inclus et le composant (c) est présent d'une quantité de 1 à 80 parties incluses, en poids, pour 100 parties en poids du poids total des composants (a) et (b).

**2.** Composition selon la revendication 1 où le polyester aromatique (a) et le polycarbonate aromatique (b) sont présents à un rapport pondéral de (a)/(b) compris entre 80/20 et 10/90.

**3.** Composition selon la revendication 2 où le rapport pondéral de (a)/(b) est compris entre 80/20 et 20/80.

**4.** Composition selon toute revendication précédente où le copolymère contenant un groupe glycidyle est présent en une quantité de 5 à 50 parties incluses en poids pour 100 parties du poids total du polyester aromatique et du polycarbonate aromatique.

**5.** Composition selon toute revendication précédente où le polyester aromatique est un polyalkylène téréphtalate.

**6.** Composition selon la revendication 4 où le polyalkylène téréphtalate est le polybutylène téréphtalate.

**7.** Composition selon toute revendication précédente où le polycarbonate aromatique est bis(4-hydroxyphényl) alkane polycarbonate.

**8.** Composition selon la revendication 7 où le bis(4-hydroxyphényl) alkane est 2,2-bis(4-hydroxyphényl)-propane.

**9.** Composition selon toute revendication précédente où le polycarbonate aromatique a un poids moléculaire moyen en nombre de 15.000 à 40.000 inclus.

**10.** Composition selon toute revendication précédente où le glycidyle ester du copolymère contenant un groupe glycidyle et le méthacrylate de glycidyle ou l'acrylate de glycidyle.

**11.** Composition selon toute revendication précédente où l'$\alpha$-oléfine du copolymère contenant un groupe glycidyle et de l'éthylène.

**12.** Composition selon la revendication 10 ou 11 où le copolymère contenant un groupe glycidyle est choisi parmi des copolymères d'éthylène/méthacrylate de glycidyle et d'éthylène/méthacrylate de glycidyle/acétate de vinyle.

**13.** Composition selon toute revendication précédente comprenant de plus un copolymère à base d'éthylène qui se compose d'éthylène et d'une $\alpha$-oléfine ayant 3 à 10 atomes de carbone, le rapport molaire de l'éthylène à l'$\alpha$-oléfine dans le copolymère à base d'éthylène étant compris entre 40/60 et 99/1, ledit copolymère à base d'éthylène étant présent en une quantité de 1 à 50 parties incluses en poids pour 100 parties en poids du poids total du polyester aromatique et du polycarbonate aromatique.

**14.** Composition selon toute revendication précédente comprenant de plus un copolymère diène qui se compose d'éthylène, d'une $\alpha$-oléfine ayant 3 à 10 atomes de carbone et d'un diène non conjugué, le rapport molaire de l'$\alpha$-oléfine dans le copolymère diène étant en une quantité de 5 à 80% en moles et la quantité molaire du diène non conjugué dans le copolymère diène étant en une quantité de 0,1 à 20

pour cent en moles, lequel copolymère diène est présent en une quantité de 1 à 50 parties incluses en poids pour 100 parties en poids du poids total du polyester aromatique et du polycarbonate aromatique.

**15.** Composition selon la revendication 13 où le copolymère à base d'éthylène est choisi parmi des copolymères d'éthylène/propylène, d'éthylène/butène-1 et d'éthylène/propylène/butène-1.

**16.** Composition selon la revendication 14 où ledit copolymère diène contient au moins deux desdites $\alpha$-oléfines, comportant au moins l'un du propylène et du butène-1 et contient au moins deux diènes non conjugués comportant au moins l'un du dicyclopentadiène, 5-éthylidène-2-norbonène et 1,4-hexadiène.

**17.** Composition selon toute revendication précédente comprenant de plus 5 à 100 parties en poids d'une charge inorganique pour 100 parties en poids du total desdits composants (a) et (b).

**18.** Composition selon la revendication 17 où la charge inorganique est choisie parmi des fibres de verre, des fibres de carbone, des fibres de métal, de la barbe de titanate de potassium, des lamelles de verre, des perles de verre, de la wollastonite, du mica, du talc, de l'argile, de l'oxyde de titane, de l'oxyde d'aluminium, du carbonate de calcium et du sulfate de baryum.

**19.** Article moulé par injection d'une composition de polyester composée de :

(a) un polyester aromatique ayant une viscosité relative de 1,2 à 2,0 inclus,

(b) un polycarbonate aromatique ayant un poids moléculaire moyen en nombre de 10.000 à 80.000 inclus, et

(c) un copolymère contenant un groupe glycidyle consistant en unités récurrentes dérivées des monomères respectifs suivants :

- une $\alpha$-oléfine,
- un glycidyl ester d'un acide carboxylique à insaturation $\alpha,\beta$-éthylénique en une quantité de 0.5 à 40% en poids du copolymère; et
- facultativement, moins de 40%, en poids du copolymère, d'au moins un autre monomère insaturé, ledit copolymère ayant un indice de fusion de 0,1 à 100g/10 mn inclus en mesurant à 190 °C selon ASTM D-1238,

où les composants (a) et (b) sont présents à un rapport pondéral de (a)/(b) compris entre 90/10 et 10/90 inclus et le composant (c) est présent en une quantité de 1 à 80 parties incluses, en poids, pour 100 parties en poids du poids total des composants (a) et (b).

**20.** Article moulé par extrusion d'une composition de polyester formée de :

(a) un polyester aromatique ayant une viscosité relative de 1,2 à 2,0 inclus,

(b) un polycarbonate aromatique ayant un poids moléculaire moyen en nombre de 10.000 à 80.000 inclus, et

(c) un copolymère contenant un groupe glydicyle consistant en unités récurrentes dérivées des monomères respectifs suivants :

- une $\alpha$-oléfine,
- un glycidyl ester d'un acide carboxylique à insaturation $\alpha,\beta$ éthylénique en une quantité de 0.5 à 40% en poids du copolymère; et
- facultativement, moins de 40% en poids du copolymère d'au moins un autre monomère insaturé, ledit copolymère ayant un indice de fusion de 0,1 à 100g/10 mn inclus, mesuré à 190 °C selon ASTM D-1238,

où les composants (a) et (b) sont présents à un rapport pondéral de (a)/(b) compris entre 90/10 et 10/90 inclus et le composant (c) est présent en une quantité de 1 à 80 parties incluses, en poids, pour 100 parties en poids du poids total des composants (a) et (b).